(19)

Europäisches
Patentamt

European
Patent Office

Office européen
des brevets

(11) **EP 2 808 805 A1**

(12) **EUROPEAN PATENT APPLICATION**

(43) Date of publication:
**03.12.2014 Bulletin 2014/49**

(21) Application number: **13305707.5**

(22) Date of filing: **30.05.2013**

(51) Int Cl.:
*G06F 17/30* [(2006.01)]       *G06T 7/00* [(2006.01)]
*G06K 9/00* [(2006.01)]       *H04N 21/234* [(2011.01)]
*H04N 21/4223* [(2011.01)]    *H04N 21/237* [(2011.01)]
*H04N 21/278* [(2011.01)]     *H04N 21/41* [(2011.01)]
*H04N 21/43* [(2011.01)]      *H04N 21/431* [(2011.01)]
*H04N 21/4722* [(2011.01)]    *H04N 21/6547* [(2011.01)]
*H04N 21/81* [(2011.01)]

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Sirot, Joèl
  35440 Montreuil-sur-Ille (FR)**

• **Vigouroux, Jean-Ronan
  35000 Rennes (FR)**
• **Chevallier, Louis
  35520 La Mézière (FR)**
• **Lefebvre, Frédéric
  35000 RENNES (FR)**
• **Zepeda, Joaquin
  35136 St.-Jacques-de-la-Lande (FR)**

(74) Representative: **Schmidt-Uhlig, Thomas
Deutsche Thomson OHG
European Patent Operations
Karl-Wiechert-Allee 74
30625 Hannover (DE)**

(54) **Method and apparatus for displaying metadata on a display and for providing metadata for display**

(57)     A method and an apparatus (20) for displaying metadata on a display are described, as well as a method and an apparatus (40) for providing such metadata for display. A mobile device (20) optically captures (10) an image displayed on a main screen. The captured image is sent (11) to a remote application, which compares (31) the image with images in a database (43) to retrieve a reference image. Based on the reference image the application retrieves (32) metadata associated to the reference image and generates (33) homography data. The metadata and the homography data are sent (34) back to the mobile device (20), which displays (13) the metadata on a display (21) in accordance with the homography data.

**Fig. 3**

**Description**

**FIELD OF THE INVENTION**

The present invention relates to a solution for displaying metadata on a display of a mobile device displaying an image or a sequence of images and a solution for providing such metadata for display. More specifically, the invention relates to a solution for displaying metadata on a display of a mobile device, which is obtained based on an image that is optically captured by the mobile device from an image or a sequence of images displayed on a main screen.

**BACKGROUND OF THE INVENTION**

Sometimes a user would like to have additional information about objects or persons that appear in a video displayed on a main screen, e.g. on a TV set. For example, it has been proposed to display a video on a device screen with graphics overlaid, the graphics indicating areas of interest, like actors face. These graphics are synchronized with the underlying video, i.e. the additional information is displayed at the correct time and at the position in the video where the corresponding person or object appears.

In case the additional metadata is not provided along with the video, it is necessary to identify the video that is being displayed in order to retrieve the metadata. For example, an automatic identification of a video content displayed on a primary screen may be achieved by capturing this content with a camera, e.g. a camera of a smartphone, and comparing the captured content with a fingerprint database. The captured content may be a single image or a short video sequence. In this case the additional information will usually be displayed on the device that is used for capturing the content.

For example, the app "TVCheck" proposes a recognition of a current broadcast program and sharing of comments with other users watching the same program. For details, see http://www.dailymotion.com/TVcheck.

A further example was described by B. Girod during the 2010 Annual Affiliates Meeting of the Stanford Computer Forum in the presentation "Mobile Visual Search". Details can be found at http://forum.stanford.edu/events/2010slides/cleanslatePOMI/POMI 2010Girod.pdf. In the presentation B. Girod describes a mobile augmented reality, where an image captured with a client device during an instant of rather low motion of the client device is transmitted to a server. The server identifies an object in the image and sends an ID and a boundary of the object back to the client device. The client compensates for any intermediate motion and displays both the ID and the object boundary at a calculated position.

**SUMMARY OF THE INVENTION**

It is an object of the present invention to propose an improved solution for displaying metadata on a display of a mobile device displaying an image or a sequence of images.

According to a first aspect of the invention, a method implemented in a mobile device for displaying metadata on a display together with an image or a sequence of images comprises the steps of:

- optically capturing an image displayed on a main screen;
- sending the captured image to a remote application;
- receiving metadata and homography data from the remote application; and
- displaying the metadata on the display in accordance with the homography data.

Accordingly, an apparatus configured to display metadata on a display together with an image or a sequence of images comprises:

- a display configured to display an image or a sequence of images;
- a camera configured to optically capture an image displayed on a main screen;
- an output configured to send the captured image to a remote application;
- an input configured to receive metadata and homography data from the remote application; and
- a processor configured to display the metadata on the display in accordance with the homography data.

Similarly, a computer readable storage medium has stored therein instructions, which when executed by a device comprising a display and a camera, cause the device to:

- optically capture an image displayed on a main screen ;
- send the captured image to a remote application;

- receive metadata and homography data from the remote application; and
- display the metadata on the display in accordance with the homography data.

According to a second aspect of the invention, a method implemented in a server for providing metadata to a client device for display together with an image or a sequence of images comprises the steps of:

- receiving, from the client device, a shot of an image displayed on a main screen;
- comparing the shot of the image with images in a database to retrieve a reference image;
- retrieving metadata associated with the reference image;
- generating homography data about the homography between the shot of the image and the reference image; and
- outputting the metadata and the homography data to the client device.

Accordingly, an apparatus configured to provide metadata to a client device for display together with an image or a sequence of images comprises:

- an input configured to receive, from the client device, a shot of an image displayed on a main screen;
- a comparator configured to compare the shot of the image with images in a database to retrieve a reference image;
- a database interface configured to retrieve metadata associated with the reference image;
- a processor configured to generate homography data about the homography between the shot of the image and the reference image; and
- an output configured to output the metadata and the homography data to the client device.

Similarly, a computer readable storage medium has stored therein instructions, which when executed by a server, cause the server to:

- receive, from a client device, a shot of an image displayed on a main screen;
- compare the shot of the image with images in a database to retrieve a reference image;
- retrieve metadata associated with the reference image;
- generate homography data about the homography between the shot of the image and the reference image; and
- output the metadata and the homography data to the client device.

When a mobile device is used to display the additional data, the user holds this device and takes a shot of a screen on which a video is displayed. Unfortunately the mobile device may be oriented in any direction at any time relative to the screen. This leads to a shift and distortion on the screen and also of the object for which the additional information shall be displayed. This problem is addressed by determining the homography between the shot of the image on the screen and a determined reference image. The determined homography data are transmitted from the remote application running on a server to the mobile device, together with the requested metadata. The homography data enables the mobile device to compute the necessary corrections, so that, in spite of the movements of the mobile device, the information is correctly displayed at the right place on the screen of the mobile device. Thanks to this solution it is thus possible to display a variety of graphics at the correct place, whatever the orientation or possible movement of the capture device. The solution also allows to take a movement of the preprocessed metadata in the video into account, in case each image of the video is individually annotated with metadata.

## BRIEF DESCRIPTION OF THE DRAWINGS

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:

Fig. 1    shows a first example of a snapshot of a screen taken with a mobile device;

Fig. 2    depicts a second example of a snapshot of a screen taken with a mobile device;

Fig. 3    shows a complete process for displaying metadata on a display of a mobile device

Fig. 4    illustrates in more detail the method steps performed by the mobile device;

Fig. 5     shows an exemplary mobile device configured to perform the steps of Fig. 4;

Fig. 6     illustrates in more detail the method steps performed by a server; and

Fig. 7     depicts an exemplary server configured to perform the steps of Fig. 6.

## DETAILED DESCRIPTION OF PREFERED EMBODIMENTS

In the following it is assumed that for requesting additional information the user holds a mobile device and takes a snapshot of a main screen on which a video is displayed. Examples for such a mobile device are a smartphone, a tablet, a netbook or a laptop, an e-book reader, a smart camera, etc. When taking the snapshot the mobile device maybe oriented in any direction relative to the main screen at any time. This leads to a shift and a distortion on the screen and of the object for which additional information shall be displayed.

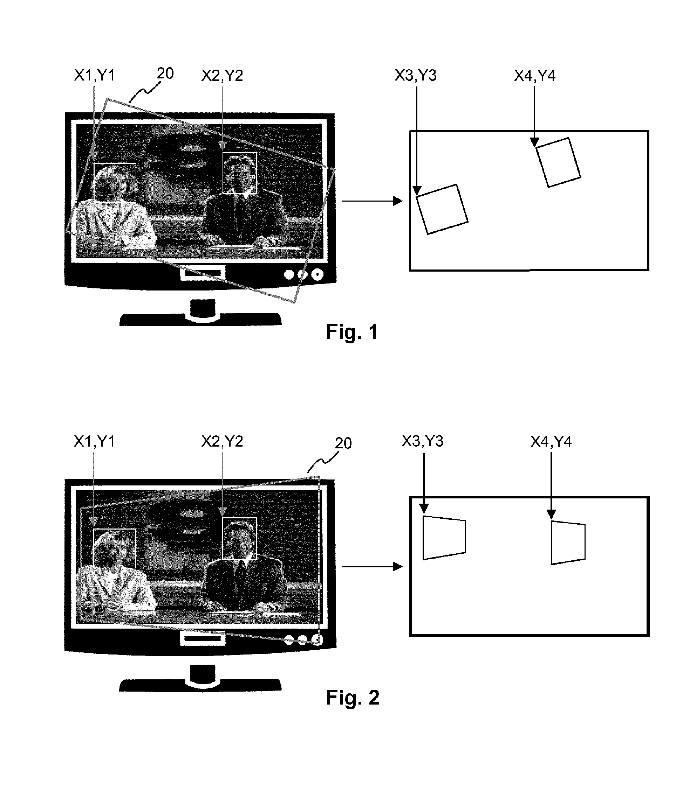

Fig. 1 and Fig. 2 show two examples of a snapshot of a screen taken with a mobile device 20. In these two cases, the depicted coordinates X1,Y1 and X2,Y2 are the coordinates of the top-left point of boxes surrounding the faces that are displayed on the screen. These are the coordinates relative to the origin point of the screen displaying the broadcast program, i.e. the TV set. In case of Fig. 1 the mobile device 20 is rotated relative to the screen. As a result the coordinates of the two bounding boxes are translated to X3,Y3 and X4,Y4 relative to the origin point of the mobile device 20. In Fig. 2 the planes of the TV set and the mobile device 20 are not parallel. As a result the coordinates of the two bounding boxes are translated to X5,Y5 and X6,Y6 relative to the origin point of the mobile device 20.

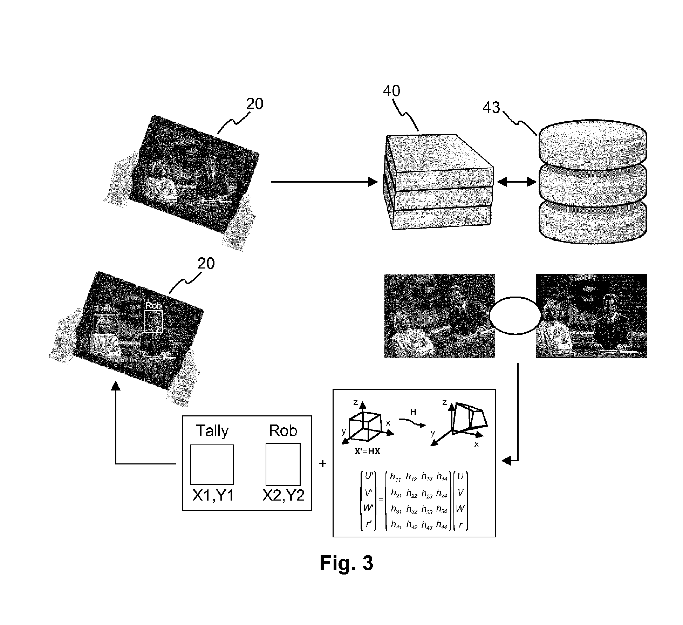

Fig. 3 shows a complete process for displaying metadata on a display 21 of a mobile device 20. The user takes a snapshot of what he sees on the TV screen at a time t. An embedded application in the mobile device 20 sends the snapshot or a series of snapshots in real time to a distant application running on a server 40. This server-side application retrieves among a huge number of indexed pictures within a database 43 the corresponding picture taken at a given time, and consequently finds the precise moment within the broadcast program when the picture was taken. One amongst a variety of algorithms suitable for finding the corresponding picture is described in B. Moghaddam et al.: "*A Bayesian similarity measure for direct image matching",* Proceedings of the 13th International Conference on Pattern Recognition, 1996, pp. 350-358. Using the determined picture as a reference, the server-side application is able to compute the homography between the reference picture and the captured picture, which is the linear transformation between two projective planes, by comparing the received picture and the original reference picture. Extensive information about homography computation can be found in R. Hartley and A. Zisserman: *"Multiple View Geometry in Computer Vision",* Cambridge University Press, second edition, 2003.

In particular, the aim of the homography computation is to find the perspective transformation between the projected image in the image plane of the mobile device 20, and the original image. The homography transforms the coordinates of the points in the image plane to the coordinates in the original image:

$$\begin{pmatrix} x \\ y \end{pmatrix} \rightarrow \begin{pmatrix} x' \\ y' \end{pmatrix}. \qquad (1)$$

Homogeneous coordinates are used to make the transformation feasible with matrix operations. A point $\begin{pmatrix} x \\ y \end{pmatrix}$ is represented by a vector:

$$\begin{pmatrix} x \\ y \\ 1 \end{pmatrix}. \qquad (2)$$

The transformation *H* is such that

$$s \begin{pmatrix} x' \\ y' \\ 1 \end{pmatrix} = H \begin{pmatrix} x \\ y \\ 1 \end{pmatrix}, \qquad\qquad (3)$$

where $s$ is a scaling factor. The computation is, therefore, in two steps. In a first step feature points are computed on the image taken with the mobile device 20, and are matched to corresponding points on the original image. Knowing the coordinates of points in the image taken by the mobile device 20 and the original points enables to compute the best suited homography function. This is done using the OpenCV (http://opencv.org/) algorithm findHomography, which searches the homography $H$, which minimizes the reconstruction error, subject optionally to some robustness conditions. In a second step the matrix $H$ is inverted. This enables to transmit the coordinates of the bounding boxes of the annotated objects or faces to the mobile device 20 in the coordinate system of the mobile device 20. These can be used to display bounding boxes around the objects or faces on the display of the mobile device 20.

Coming back to Fig. 1 and Fig. 2, knowledge of the homography data allows finding the coordinates X3,Y3 and X4,Y4 as well as X5,Y5 and X6,Y6, and also all the other points of the bounding boxes relative to the origin point of the mobile device 20. Therefore, the resulting homography data are sent back to the mobile device 20, so that the mobile device 20 is able to compute the necessary corrections. The server-side application further retrieves the metadata associated to the picture at the given time t and sends it back to the mobile device 20. The mobile device 20 is thus able to provide a coherent display of the metadata on its display 21.

Advantageously, the mobile device 20 periodically transmits a captured image to the remote application in order to receive updated homography data. In this way a reasonably accurate positioning of the metadata on the display 21 of the mobile device 20 is ensured, even if the position of the mobile device 20 relative to the main screen changes with time. Alternatively or in addition, the mobile device 20 favorably uses available acceleration sensors or position sensors to adjust the positioning of the displayed metadata for subsequent images.

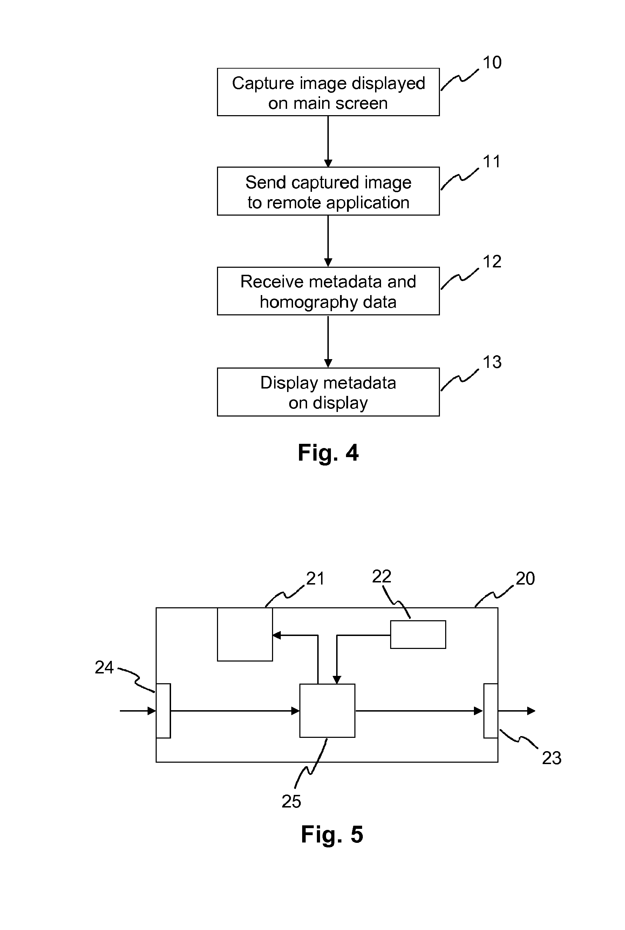

Fig. 4 illustrates in more detail the method steps performed by the mobile device 20 for displaying metadata on its display together with an image or a sequence of images. Upon capturing 10 an image displayed on a main screen with a camera 22, the mobile device 20 sends 11 the captured image to a remote application running on a server 40. In response the mobile device 20 receives 12 metadata and homography data from the remote application. In accordance with the homography data the metadata are correctly displayed 13 on the display.

An exemplary mobile device 20 configured to perform the steps of Fig. 4 is shown in Fig. 5. The device 20 has a display 21 for displaying 13 an image or a sequence of images. A camera 22 allows capturing 10 an image displayed on a main screen. The captured image can be sent 11 to a remote application via an output 23. Metadata and homography data is then received 12 from the remote application via an input 24. Of course, the output 23 and the input 24 may likewise be combined into a single, bi-directional communication interface. Based on the homography data a processor 25 correctly displays 13 the metadata on the display 21.

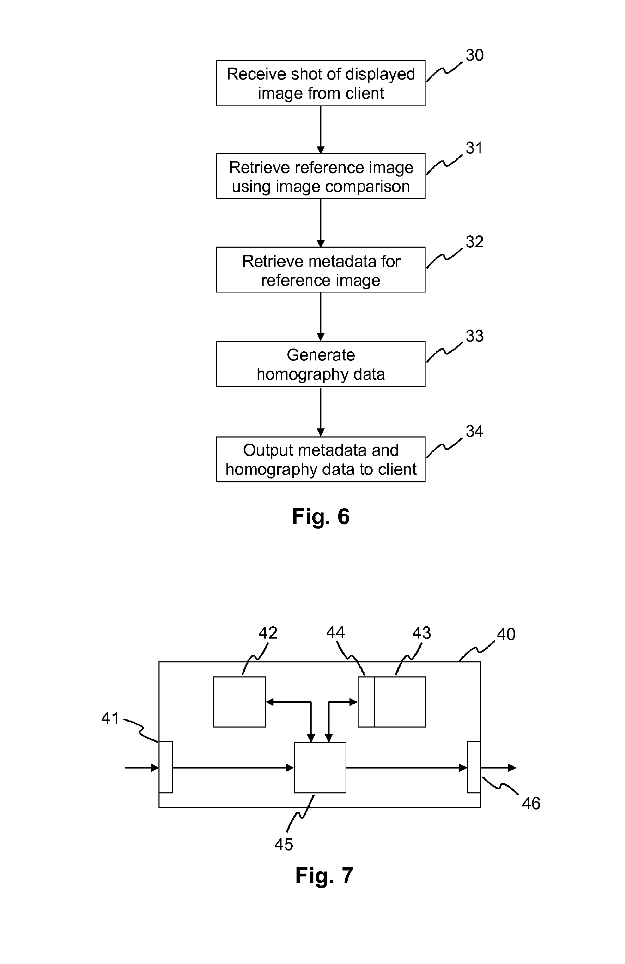

Fig. 6 illustrates the method steps performed by a server 40 in more detail. After receiving 30, from the client device 20, a shot of an image displayed on a main screen, this shot is compared 31 with images in a database 43 to retrieve a reference image. Once the reference image is known, metadata associated with the reference image are retrieved 32, e.g. from the database 43 or from another source. In the next step homography data about the homography between the shot of the image and the reference image are generated 33. Finally, the metadata and the homography data are output 34 to the client device 20.

An exemplary server 40 configured to perform the steps of Fig. 6 is depicted in Fig. 7. The server 40 has an input 41 for receiving 30, from a client device 20, a shot of an image displayed on a main screen. A comparator 42 compares 31 the received shot with images in a database 43 to retrieve a reference image from the database 43 via a database interface 44. The database interface 44 further allows retrieving 32 metadata associated with the reference image from the database 43 or from another source. Based on the shot and the reference image a processor 45 generates 33 homography data about the homography between the shot of the image and the reference image. The metadata and the homography data are output 34 to the client device 20 via an output 46. Of course, the input 41 and the output 46 may likewise be combined into a single, bi-directional communication interface.

## Claims

1. A method implemented in a mobile device (20) for displaying metadata on a display together with an image or a sequence of images, the method **comprising** the steps of:

- optically capturing (10) an image displayed on a main screen;
- sending (11) the captured image to a remote application;
- receiving (12) metadata and homography data from the remote application; and
- displaying (13) the metadata on the display in accordance with the homography data.

2. The method according to claim 1, **wherein** the metadata comprises coordinates of bounding boxes of annotated objects in the image or the sequence of images.

3. The method according to claim 1 or 2, **wherein** the homography data is received (12) from the remote application as a homography matrix.

4. An apparatus (20) configured to display metadata on a display together with an image or a sequence of images, the apparatus **comprising**:

   - a display (21) configured to display (13) an image or a sequence of images;
   - a camera (22) configured to optically capture (10) an image displayed on a main screen;
   - an output (23) configured to send (11) the captured image to a remote application;
   - an input (24) configured to receive (12) metadata and homography data from the remote application; and
   - a processor (25) configured to display (13) the metadata on the display (21) in accordance with the homography data.

5. A computer readable storage medium having stored therein instructions, which when executed by a device (20) comprising a display (21) and a camera (22), cause the device (20) to:

   - optically capture (10) an image displayed on a main screen;
   - send (11) the captured image to a remote application;
   - receive (12) metadata and homography data from the remote application; and
   - display (14) the metadata on the display (21) in accordance with the homography data.

6. A method implemented in a server (40) for providing metadata to a client device (20) for display together with an image or a sequence of images, the method **comprising** the steps of:

   - receiving (30), from the client device (20), a shot of an image displayed on a main screen;
   - comparing (31) the shot of the image with images in a database (43) to retrieve a reference image;
   - retrieving (32) metadata associated with the reference image;
   - generating (33) homography data about the homography between the shot of the image and the reference image; and
   - outputting (34) the metadata and the homography data to the client device (20).

7. The method according to claim 6, **wherein** the data about the homography are generated (33) by computing feature points on the shot of the image and matching the computed feature points to corresponding points of the reference image.

8. The method according to claim 6 or 7, **wherein** the homography data is output (34) to the client device (20) as a homography matrix.

9. The method according to one of claims 6 to 8, **wherein** the metadata comprises coordinates of bounding boxes of annotated objects in the image or the sequence of images.

10. An apparatus (40) configured to provide metadata to a client device (20) for display together with an image or a sequence of images, the apparatus (40) **comprising**:

    - an input (41) configured to receive (30), from the client device (20), a shot of an image displayed on a main screen;
    - a comparator (42) configured to compare (31) the shot of the image with images in a database (43) to retrieve a reference image;
    - a database interface (44) configured to retrieve (32) metadata associated with the reference image;
    - a processor (45) configured to generate (33) homography data about the homography between the shot of the image and the reference image; and
- an output (46) configured to output (34) the metadata and the homography data to the client device (20).

**11.** A computer readable storage medium having stored therein instructions, which when executed by a server (40), cause the server (40) to:

- receive (30), from a client device (20), a shot of an image displayed on a main screen;
- compare (31) the shot of the image with images in a database (43) to retrieve a reference image;
- retrieve (32) metadata associated with the reference image;
- generate (33) homography data about the homography between the shot of the image and the reference image; and
- output (34) the metadata and the homography data to the client device (20).

Fig. 1

Fig. 2

**Fig. 3**

$$X'=HX$$

$$\begin{pmatrix} U' \\ V' \\ W' \\ r' \end{pmatrix} = \begin{pmatrix} h_{11} & h_{12} & h_{13} & h_{14} \\ h_{21} & h_{22} & h_{23} & h_{24} \\ h_{31} & h_{32} & h_{33} & h_{34} \\ h_{41} & h_{42} & h_{43} & h_{44} \end{pmatrix} \begin{pmatrix} U \\ V \\ W \\ r \end{pmatrix}$$

Capture image displayed
on main screen    10

Send captured image
to remote application    11

Receive metadata and
homography data    12

Display metadata
on display    13

**Fig. 4**

21    22    20

24

23

25

**Fig. 5**

```
┌─────────────────────────┐
│ Receive shot of displayed │ ⟋30
│    image from client      │
└─────────────────────────┘
             │
             ▼
┌─────────────────────────┐
│  Retrieve reference image │ ⟋31
│  using image comparison   │
└─────────────────────────┘
             │
             ▼
┌─────────────────────────┐
│   Retrieve metadata for   │ ⟋32
│      reference image      │
└─────────────────────────┘
             │
             ▼
┌─────────────────────────┐
│       Generate            │ ⟋33
│   homography data         │
└─────────────────────────┘
             │
             ▼
┌─────────────────────────┐
│   Output metadata and     │ ⟋34
│ homography data to client │
└─────────────────────────┘
```

**Fig. 6**

**Fig. 7**

Europäisches Patentamt

European Patent Office

Office européen des brevets

**EUROPEAN SEARCH REPORT**

Application Number

EP 13 30 5707

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/243732 A1 (SWAMINATHAN ASHWIN [US] ET AL) 27 September 2012 (2012-09-27) * the whole document * ----- | 1-11 | INV. G06F17/30 G06T7/00 G06K9/00 |
| X | US 2010/309226 A1 (QUACK TILL [CH] ET AL) 9 December 2010 (2010-12-09) * abstract; figures 1,3 * * paragraph [0001] * * paragraph [0008] - paragraph [0014] * * paragraph [0035] - paragraph [0050] * ----- | 1-11 | H04N21/234 H04N21/4223 H04N21/237 H04N21/278 H04N21/41 H04N21/43 H04N21/431 |
| A,D | Bernd Girod: "Mobile Visual Search", 2010 Annual Affiliates Meeting, April 27-30 2010, Arrillaga Alumni Center at Stanford University, CA, USA, 27 April 2010 (2010-04-27), pages 1-24, XP055079647, Internet Retrieved from the Internet: URL:http://forum.stanford.edu/events/2010s lides/cleanslatePOMI/POMI2010Girod.pdf [retrieved on 2013-09-17] * "Mobile Augmented Reality"; page 20 * ----- | 1-11 | H04N21/4722 H04N21/6547 H04N21/81 |
| A | BERND GIROD ET AL: "Mobile Visual Search", IEEE SIGNAL PROCESSING MAGAZINE, IEEE SERVICE CENTER, PISCATAWAY, NJ, US, vol. 28, no. 4, 15 July 2011 (2011-07-15), pages 61-76, XP011367629, ISSN: 1053-5888, DOI: 10.1109/MSP.2011.940881 * the whole document * ----- | 1-11 | TECHNICAL FIELDS SEARCHED (IPC) G06F G06T H04N G06K |

The present search report has been drawn up for all claims

| Place of search | Date of completion of the search | Examiner |
|---|---|---|
| Munich | 20 September 2013 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 5707

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2013

| Patent document cited in search report | Publication date | Patent family member(s) | | Publication date |
|---|---|---|---|---|
| US 2012243732 A1 | 27-09-2012 | CN | 103119627 A | 22-05-2013 |
| | | EP | 2619728 A1 | 31-07-2013 |
| | | KR | 20130060339 A | 07-06-2013 |
| | | US | 2012243732 A1 | 27-09-2012 |
| | | WO | 2012040099 A1 | 29-03-2012 |
| US 2010309226 A1 | 09-12-2010 | EP | 2147392 A1 | 27-01-2010 |
| | | JP | 2010530998 A | 16-09-2010 |
| | | US | 2010309226 A1 | 09-12-2010 |
| | | WO | 2008134901 A1 | 13-11-2008 |

EPO FORM P0459

For more details about this annex : see Official Journal of the European Patent Office, No. 12/82